# EUROPÄISCHE PATENTSCHRIFT

(11) **EP 1 670 670 B1**
(45) Veröffentlichungstag und Bekanntmachung des Hinweises auf die Patenterteilung: **15.12.2010**
(21) Anmeldenummer: 04764945.4
(22) Anmeldetag: 08.09.2004
(51) Int. Cl.: B60T 13/66, B60T 17/22, B60T 13/38

(54) **LUFTAUFBEREITUNGSANLAGE UND VERFAHREN ZUM SICHEREN LÖSEN EINER FESTSTELLBREMSANLAGE**
AIR TREATMENT SYSTEM AND METHOD FOR SECURELY RELEASING A PARKING BRAKE SYSTEM
SYSTEME DE TRAITEMENT D'AIR ET PROCEDE DE LIBERATION SUR D'UN SYSTEME DE FREINAGE DE STATIONNEMENT

(30) Priorität: 10.09.2003 DE 10341723
(43) Veröffentlichungstag der Anmeldung: 21.06.2006
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2004/010002
(87) Internationale Veröffentlichungsnummer: WO 2005/025958

(56) Entgegenhaltungen:
- EP-A- 1 063 453
- EP-A1- 0 638 716
- US-A- 4 824 178
- US-A- 5 706 909
- US-A- 5 939 795

## Beschreibung

Die Erfindung betrifft eine Luftaufbereitungsanlage zum Versorgen einer Nutzkraftfahrzeugbremsanlage mit Druckluft, mit einem zur Versorgung einer Feststellbremsanlage vorgesehenen Druckluftausgang, der zur Belüftung mindestens eines Federspeicherzylinders einer Feststellbremse und damit zum Lösen der Feststellbremse vorgesehen ist, wobei der Druckluftausgang über ein Handbremsventil mit dem mindestens einen Federspeicherzylinder verbunden ist und bei Anwesenheit einer Person zur Führung des Nutzkraftfahrzeugs ein elektrisch auswertbarer Indikator zur Verfügung gestellt werden kann.

Die Erfindung betrifft weiterhin ein Verfahren zum Belüften mindestens eines Federspeicherzylinders einer Feststellbremse und damit zum Lösen der Feststellbremse einer Nutzkraftfahrzeugbremsanlage, die von einer Luftaufbereitungsanlage mit Druckluft versorgt wird, wobei die Luftaufbereitungsanlage einen zur Versorgung der Feststellbremsanlage vorgesehenen Druckluftausgang aufweist, der über ein Handbremsventil mit dem mindestens einen Federspeicherzylinder verbunden ist, wobei bei Anwesenheit einer Person zur Führung des Nutzkraftfahrzeugs ein elektrisch auswertbarer Indikator zur Verfügung gestellt werden kann.

Gattungsgemäße Luftaufbereitungsanlagen erfüllen zahlreiche die Druckluftversorgung eines Nutzkraftfahrzeugs betreffende Funktionen. Unter anderem dienen die Luftaufbereitungsanlagen dazu, das Bremssystem eines Nutzkraftfahrzeugs mit Druckluft zu versorgen. Insbesondere werden über Luftaufbereitungsanlagen Druckluftbehälter mit Luft befüllt, um so einen Druckluftvorrat für die verschiedenen Bremskreise zur Verfügung zu stellen. Bei einem Nutzkraftfahrzeug mit zwei Bremskreisen für die Betriebsbremsanlage ist es erforderlich, für jeden dieser Bremskreise einen Druckluftbehälter vorzusehen. Im Allgemeinen ist ein dritter Druckluftbehälter vorhanden, der einen Vorrat für die Anhängerbremsanlage ("Kreis 3") bereithält.

Auch die Feststellbremsanlage von Nutzkraftfahrzeugen arbeitet mit Druckluft. Um das Fahrzeug bei abgeschaltetem Motor und somit abgeschaltetem Kompressor arretieren zu können, sind in der Feststellbremsanlage Federspeicherzylinder vorgesehen, die mittels einer Federkraft die erforderliche Feststellbremswirkung zur Verfügung stellen. Zum Lösen der Feststellbremsen werden die Federspeicherzylinder belüftet, so dass der Federkraft entgegengewirkt wird, wodurch die Feststellbremsen gelöst werden können. Um ein solches Lösen der Feststellbremsanlage zu veranlassen ist es somit erforderlich, dass an dem betreffenden Ausgang der Luftbereitungsanlage Druckluft ansteht und dass weiterhin ein im Allgemeinen zwischen den Federspeicherzylindern und dem Druckluftausgang vorgesehenes Handbremsventil in Lösestellung gebracht wird.

Der Betrieb eines Fahrzeugs mit einer derartigen Feststellbremsanlage ist unproblematisch, wenn das Handbremsventil bei einem Druck gelöst wird, der ausreicht, um die Feststellbremse zu lösen. Steht jedoch kein Druck oder nur ein geringer Druck an dem Druckluftausgang für die Feststellbremsanlage an, so kann das Öffnen des Handbremsventils zunächst kein Lösen der Feststellbremsanlage bewirken. Wird dann später ein ausreichender Druck für das Lösen der Feststellbremsanlage aufgebaut, so erfolgt dieses Lösen in einem zum Öffnen des Handbremsventils unkorrelierten zeitlichen Abstand. Dies bringt Gefahren mit sich. Wenn der Fahrer beispielsweise an kalten Wintertagen den Motor warmlaufen lässt, das Handbremsventil öffnet und danach das Fahrzeug verlässt, um die Fahrzeugscheiben von Eis zu befreien, so wird mit der Zeit Druckluft aufgebaut. Bei ausreichender Druckluft werden somit die Federspeicherzylinder belüftet, und es kommt zu einem unbeabsichtigten und unerwarteten Lösen der Feststellbremsanlage. So kann sich das Fahrzeug unbeabsichtigt in Bewegung setzen.

Die US 4,824,178 beschreibt ein Bremssystem mit Federspeicherzylindern. Die Federspeicherzylinder beziehen ihren Arbeitsdruck aus einem Druckluftvorrat, wobei die Steuerung des Arbeitsdruckes durch ein zwischen den Druckluftvorrat und die Federspeicherzylinder geschaltetes Handbremsventil erfolgt. Als zusätzliche Maßnahme ist ein elektrisch betätigbares Ventil vorgesehen, das zwischen das Handbremsventil und die Federspeicherzylinder geschaltet ist.

Es ist die Aufgabe der vorliegenden Erfindung, eine Luftaufbereitungsanlage zur Verfügung zu stellen, welche in ökonomischer und wirkungsvoller Weise Sicherheitsfunktionen für ein Feststellbremssystem zur Verfügung stellt.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Luftaufbereitungsanlage dadurch auf, dass ein elektrisch betätigbares Ventil vorgesehen ist, mittels welchem eine Versorgung des Druckluftausgangs mit Druckluft verhindert werden kann, und dass das elektrisch betätigbare Ventil die Versorgung des Druckluftausgangs mit Druckluft verhindert, wenn der Indikator nicht vorliegt. Auf diese Weise wird sichergestellt, dass es nicht zu einer unbeabsichtigten Belüftung der Federspeicherzylinder der Feststellbremsanlage kommen kann. Vielmehr kann eine Belüftung der Federspeicherzylinder nur dann erfolgen, wenn eine Person zur Führung des Nutzkraftfahrzeugs anwesend ist und infolgedessen ein elektrisch auswertbarer Indikator zur Verfügung gestellt wird. Liegt dieser Indikator nicht vor, so wird ein elektrisch betätigbares Ventil dazu veranlasst, die Druckluftzufuhr zum Druckluftausgang der Feststellbremsanlage zu sperren. Aufgrund eines fehlenden dritten Vorratsbehälters ist weiterhin sichergestellt, dass auch eine unbeabsichtigte Belüftung der Felderspeicherzylinder auf diese Weise vermieden wird.

Nützlicherweise ist vorgesehen, dass der Druckluftausgang über ein Überströmventil mit Druckluft versorgt wird und dass das elektrisch betätigbare Ventil ein Magnetventil ist, das in mindestens einem Schaltzustand das Überströmventil sperrt. Es gibt also mindestens zwei notwendige Bedingungen für das Belüften eines Federspeicherzylinders, nämlich erstens ein offenes Handbremsventil und zweitens ein nicht gesperrtes Überströmventil. Das Magnetventil kann in einfacher Weise und in Abhängigkeit von der Anwesenheit eines elektrisch auswertbaren Indikators angesteuert werden. Je nach Schaltzustand des Magnetventils kann das Überströmventil gesperrt werden.

Die Erfindung ist in besonders vorteilhafter Weise dadurch weitergebildet, dass das Magnetventil ein 3/2-Ventil ist, das in einem ersten Schaltzustand einen Steuereingang des Überströmventils entlüftet und in einem zweiten Schaltzustand den Steuereingang des Überströmventils mit Druck beaufschlagt, wodurch das Überströmventil gesperrt wird. An einem Anschluss des Magnetventils ist die Druckluftversorgung angeschlossen, und an einem anderen Anschluss des Magnetventils ist der Steuereingang des Überströmventils angeschlossen. Weiterhin steht ein Ausgang zur Entlüftung zur Verfügung. In einem Schaltzustand des 3/2-Ventils, in dem der Drucklufteingang mit dem Druckluftausgang verbunden ist, wird somit bei am Eingang anstehender Druckluft der Steuereingang des Überströmventils mit Druck beaufschlagt. In dem anderen Schaltzustand ist der mit dem Steuereingang des Überströmventils verbundene Anschluss des 3/2-Ventils mit dem Entlüftungsausgang verbunden, so dass der Steuereingang hierüber entlüftet werden kann. Neben der direkten Ansteuerung des Überströmventils durch das vorzugsweise als 3/2-Ventil ausgebildete Magnetventil ist es auch denkbar, ein Magnetventil zur pneumatischen Ansteuerung eines Vorsteuerventils zu verwenden und auf diese Weise die betreffenden Schaltzustände zu realisieren.

Es ist bevorzugt, dass der zweite Schaltzustand des 3/2-Magnetventils durch Bestromen des 3/2-Magnetventils herbeigeführt wird. Da eine Sperrung des Überströmventils immer nur kurzzeitig während des Druckluftaufbaus im Druckluftsystem des Nutzkraftfahrzeugs erforderlich ist, wird durch die angesprochene Schaltlogik eine möglichst kurze Bestromungszeit des Magnetventils sichergestellt.

In einer Ausführungsform kann vorgesehen sein, dass das Magnetventil zentral mit Druckluft versorgt wird. In diesem Fall kann die Sperrung des Überströmventils immer dann erfolgen, wenn vom Kompressor Druck geliefert wird.

Es kann aber auch nützlich sein, dass das Magnetventil durch mindestens einen Betriebsbremskreis mit Druckluft versorgt wird. In diesem Fall können die Vorratsbehälter der Betriebsbremsanlage den erforderlichen Steuerdruck für das Überströmventil zur Verfügung stellen.

Es ist bevorzugt, dass der elektrisch auswertbare Indikator durch Betätigen eines Pedals im Führerhaus des Nutzkraftfahrzeugs zur Verfügung gestellt wird. Dabei kommt zum Beispiel das Antippen des Gaspedals, des Bremspedals oder des Kupplungspedals infrage. Es handelt sich hierbei um die Erzeugung zuverlässiger Indikatoren, da ein solches Antippen der Pedalerie nur dann möglich ist, wenn eine Person im Führerhaus des Nutzkraftfahrzeugs anwesend ist.

Ebenso kann es sinnvoll sein, dass der elektrisch auswertbare Indikator durch Anlegen eines Sicherheitsgurts im Führerhaus des Nutzkraftfahrzeugs zur Verfügung gestellt wird. Auch ein angelegter Sicherheitsgurt ist im Allgemeinen ein zuverlässiges Kriterium dafür, dass eine Person anwesend ist.

Die erfindungsgemäße Luftaufbereitungsanlage ist in vorteilhafter Weise dadurch weitergebildet, dass der elektrisch auswertbare Indikator über einen Datenbus einer elektrischen Steuerung unmittelbar oder mittelbar zuführbar ist und dass das elektrisch betätigbare Ventil von der elektrischen Steuerung betätigbar ist. Das beispielsweise durch Antippen eines Pedals erzeugte elektrische Signal kann zum Beispiel einem Fahrzeugführungsrechner zur Verfügung gestellt werden, der dann eine elektrische Signalweiterleitung über einen Zentralstecker zur elektrischen Steuerung der Luftaufbereitungsanlage weitergibt. Das direkt von der Luftaufbereitungsanlage ansteuerbare Magnetventil kann dann in Abhängigkeit der Anwesenheit des Indikators angesteuert werden.

Weiterhin ist vorteilhafterweise vorgesehen, dass eine Signaleinrichtung im Führerhaus des Nutzkraftfahrzeugs vorgesehen ist, die anzeigt, dass ein Minimaldruck zum Betreiben der Betriebsbremsanlage überschritten ist, und dass bei Überschreiten des Minimaldrucks und vorliegendem Indikator der Druckluftausgang mit Druckluft versorgt wird. Sobald ausreichender Druck in der Betriebsbremsanlage vorliegt, spricht nichts mehr gegen ein Belüften der Federspeicherzylinder, solange sich eine Person im Führerhaus des Nutzkraftfahrzeugs befindet; Letzteres wird durch Überprüfung des Vorliegens des Indikators sichergestellt.

In diesem Zusammenhang ist es insbesondere nützlich, dass als Signaleinrichtung eine Leuchte verwendet wird, die herkömmlich die Arretierung des Fahrzeugs mittels der Feststellbremsanlage anzeigt, dass die Leuchte bei Überschreiten des Minimaldrucks und festgestellter Feststellbremse blinkt und dass die Leuchte bei Überschreiten einer Druckschwelle im Federspeicherzylinder erlischt. Der normale Ablauf beim Starten eines mit der erfindungsgemäßen Luftaufbereitungsanlage ausgestatteten Nutzkraftfahrzeugs wird also sein, dass der Fahrer die Zündung einschaltet und somit einen Druckaufbau in der Luftaufbereitungsanlage veranlasst. Zu diesem Zeitpunkt wird die Feststellbremsanlage noch entlüftet sein, so dass das Fahrzeug arretiert ist. Die Lampe für die Feststellbremsanlage leuchtet in gewohnter Weise. Nachfolgend wird sich Druck in der Luftaufbereitungsanlage aufbauen, und ein Minimaldruck zum Betreiben der Betriebsbremsanlage wird überschritten. Zu diesem Zeitpunkt fängt die Lampe an zu blinken, so dass dem Fahrer angezeigt wird, dass er die Feststellbremsanlage lösen kann. Zu diesem Zweck öffnet der Fahrer das Handbremsventil, falls dies nicht schon zu einem früheren Zeitpunkt geschehen ist, und stellt den elektrisch auswertbaren Indikator zur Verfügung, beispielsweise durch Antippen des Bremspedals oder durch Anlegen eines Sicherheitsgurts beziehungsweise durch die Tatsache, dass der Sicherheitsgurt bereits angelegt ist. Sobald in den Federspeicherzylindern eine Druckschwelle überschritten wird, erlischt die Leuchte vollständig, wodurch angezeigt wird, dass die Feststellbremsen gelöst sind.

Die Erfindung baut auf dem gattungsgemäßen Verfahren dadurch auf, dass ein elektrisch betätigbares Ventil vorgesehen ist, mittels welchem eine Versorgung des Druckluftausgangs mit Druckluft verhindert werden kann, und dass das elektrisch betätigbare Ventil die Versorgung des Druckluftausgangs mit Druckluft verhindert, wenn der Indikator nicht vorliegt. Auf diese Weise werden die Vorteile und Besonderheiten der erfindungsgemäßen Luftaufbereitungsanlage auch im Rahmen eines Verfahrens umgesetzt. Dies gilt auch für die nachfolgend angegebenen besonders bevorzugten Ausführungsformen des erfindungsgemäßen Verfahrens.

Nützlicherweise ist vorgesehen, dass der Druckluftausgang über ein Überströmventil mit Druckluft versorgt wird und dass das elektrisch betätigbare Ventil ein Magnetventil ist, das in mindestens einem Schaltzustand das Überströmventil sperrt.

Das erfindungsgemäße Verfahren ist in besonders vorteilhafter Weise dadurch weitergebildet, dass das Magnetventil ein 3/2-Ventil ist, das in einem ersten Schaltzustand einen Steuereingang des Überströmventils entlüftet und in einem zweiten Schaltzustand den Steuereingang des Überströmventils mit Druck beaufschlagt, wodurch das Überströmventil gesperrt wird.

Es ist bevorzugt, dass der zweite Schaltzustand des 3/2-Magnetventils durch Bestromen des 3/2-Magnetventils herbeigeführt wird.

In einer Ausführungsform des erfindungsgemäßen Verfahrens kann vorgesehen sein, dass das Magnetventil zentral mit Druckluft versorgt wird.

Es kann aber auch nützlich sein, dass das Magnetventil durch mindestens einen Betriebsbremskreis mit Druckluft versorgt wird.

Bei dem erfindungsgemäßen Verfahren ist nützlicherweise vorgesehen, dass der elektrisch auswertbare Indikator durch Betätigen eines Pedals im Führerhaus des Nutzkraftfahrzeugs zur Verfügung gestellt wird.

Es ist bevorzugt, dass der elektrisch auswertbare Indikator durch Anlegen eines Sicherheitsgurts im Führerhaus des Nutzkraftfahrzeugs zur Verfügung gestellt wird.

Ebenso kann es sinnvoll sein, dass der elektrisch auswertbare Indikator über einen Datenbus einer elektrischen Steuerung unmittelbar oder mittelbar zugeführt wird und dass das elektrisch betätigbare Ventil von der elektrischen Steuerung betätigt wird.

Das erfindungsgemäße Verfahren ist in vorteilhafter Weise dadurch weitergebildet, dass eine Signaleinrichtung im Führerhaus des Nutzkraftfahrzeugs vorgesehen ist, die anzeigt, dass ein Minimaldruck zum Betreiben der Betriebsbremsanlage überschritten ist, und dass bei Überschreiten des Minimaldrucks und vorliegendem Indikator der Druckluftausgang mit Druckluft versorgt wird.

Weiterhin ist vorteilhafterweise vorgesehen, dass als Signaleinrichtung eine Leuchte verwendet wird, die herkömmlich die Arretierung des Fahrzeugs mittels der Feststellbremsanlage anzeigt, dass die Leuchte bei Überschreiten des Minimaldrucks und festgestellter Feststellbremse blinkt und dass die Leuchte bei Überschreiten einer Druckschwelle im Federspeicherzylinder erlischt.

Die Erfindung betrifft weiterhin ein Nutzkraftfahrzeug mit einer erfindungsgemäßen Luftaufbereitungsanlage.

Der Erfindung liegt die Erkenntnis zugrunde, dass durch die Forderung eines elektrisch auswertbaren Indikators als Voraussetzung für die Belüftung der Federspeicherzylinder der Feststellbremsanlage eine zusätzliche Sicherheit beim Lösen der Feststellbremsanlage zur Verfügung gestellt wird. So kann im Rahmen der Erfindung gefordert sein, dass sich ein Fahrer im Führerhaus des Nutzkraftfahrzeugs befindet, um die Belüftung der Federspeicherzylinder zuzulassen.

Die Erfindung wird nun mit Bezug auf die begleitenden Zeichnungen anhand bevorzugter Ausführungsformen beispielhaft erläutert.

Dabei zeigt:
- Figur 1: eine Schaltskizze einer ersten Ausführungsform einer erfindungsgemäßen Luftaufbereitungsanlage;
- Figur 2: eine Schaltskizze einer zweiten Ausführungsform einer erfindungsgemäßen Luftaufbereitungsanlage;
- Figur 3: eine Schaltskizze einer dritten Ausführungsform einer erfindungsgemäßen Luftaufbereitungsanlage; und
- Figur 4: ein Flussdiagramm zur Erläuterung eines erfin- dungsgemäßen Verfahrens.

Bei der nachfolgenden Beschreibung der Zeichnungen bezeichnen gleiche Bezugszeichen gleiche oder vergleichbare Komponenten.

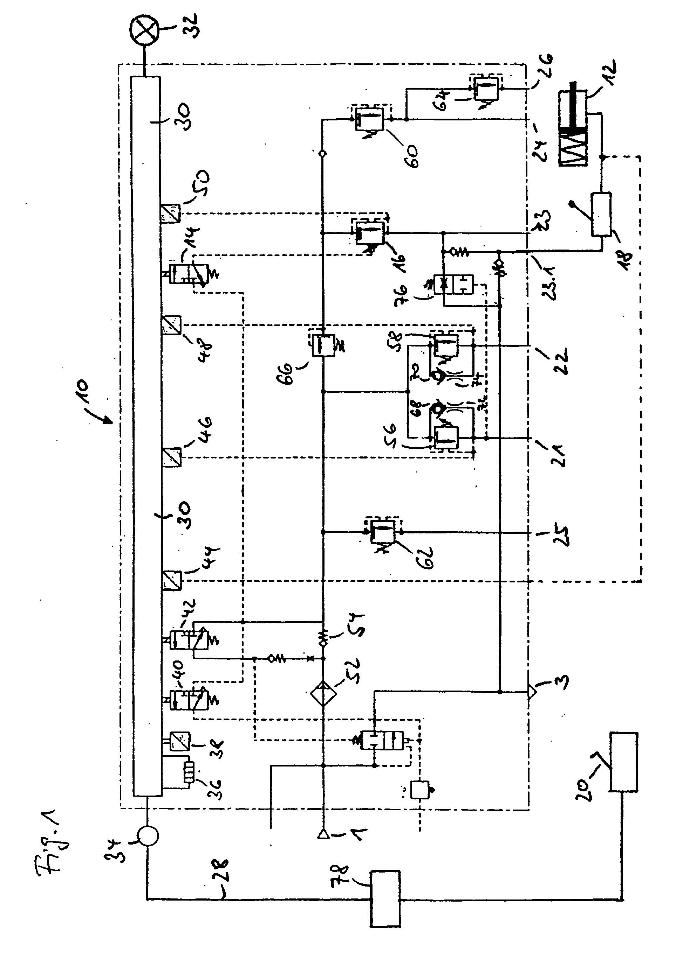

Figur 1 zeigt eine Schaltskizze einer ersten Ausführungsform einer erfindungsgemäßen Luftaufbereitungsanlage. Die Luftaufbereitungsanlage 10 ist mit einem Zentralstecker 34 ausgestattet. Über diesen Zentralstecker 34 kann die elektrische Steuerung 30 der Luftaufbereitungsanlage 10 beispielsweise mit einem CAN-Bus 28 verbunden werden.

Innerhalb der Luftaufbereitungsanlage 10 stehen die folgenden Bauteile mit der elektrischen Steuerung 30 in Verbindung: eine Heizung 36, ein Temperatursensor 38, ein Magnetventil 40 zur Druckreglersteuerung, ein Magnetventil 42 zur Regenerationssteuerung, mehrere Drucksensoren 44, 46, 48, 50 und ein 3/2-Magnetventil 14, welches, wie weiter unten erläutert, für die erfindungsgemäße Sperrung der Druckluftzufuhr zum Druckluftausgang 23.1 vorgesehen ist.

Außerhalb der Luftaufbereitungsanlage 10 ist eine Leuchte 32 vorgesehen, die ebenfalls mit der elektrischen Steuerung 30 der Luftaufbereitungsanlage 10 in Verbindung steht, wobei auch diese Verbindung unmittelbar oder mittelbar über einen Datenbus erfolgen kann.

Die Luftaufbereitungsanlage 10 ist weiterhin mit einem Befülleingang 1 ausgestattet, so dass eine Befüllung über eine Trocknerkartusche 52 und ein Druckreglerrückschlagventil 54 erfolgen kann. Zur Versorgung der verschiedenen Druckverbraucherkreise werden die Druckluftausgänge 21, 22, 23, 23.1, 24, 25, 26 über Überströmventile 56, 58, 16, 60, 62, 64 mit Druckluft versorgt. Den Überströmventilen 16, 60, 64 ist dabei zusätzlich ein Druckbegrenzungsventil 66 vorgeschaltet. Die Überströmventile 56, 58 sind für die Versorgung der Druckluftausgänge 21, 22 für die Betriebsbremsanlagenkreise vorgesehen. Parallel zu diesen Überströmventilen 56, 58 sind Rückschlagventile 68, 70 und Drosseln 72, 74 geschaltet. Die Rückschlagventile 68, 70 gestatten eine Umgehung der Überströmventile 56, 58 in Richtung von den Druckluftausgängen 21, 22 weg. Auf diese Weise ist eine Nachversorgung der am Druckluftausgang 23 angeordneten Anhängerbremsanlage möglich. Diese Nachversorgung wird zur Verfügung gestellt, da kein separater Behälter für die Druckluftspeicherung speziell für die Anhängerbremsanlage am Druckluftausgang 23 angeschlossen ist. Das Fortlassen eines solchen Behälters ist für die erfindungsgemäße Funktion der Luftaufbereitungsanlage wichtig, was weiter unten noch erläutert wird. Weiterhin ist ein Ventil 76 vorgesehen, das in einem Schaltzustand ein gedrosseltes Abströmen von Druckluft aus der Anhängerbremsanlage 23 zum Ablass 3 gestattet, während es in seinem anderen Schaltzustand in Abhängigkeit des Druckes in einem der Betriebsbremskreise, hier am Druckluftausgang 21, das Abströmen der Druckluft aus der Anhängerbremsanlage verhindert.

Die dargestellte Luftaufbereitungsanlage 10 enthält weitere Komponenten, die für das Verständnis der Erfindung jedoch weniger wichtig sind. Diese Komponenten werden folglich nicht beschrieben.

Am Druckluftausgang 23.1 der Luftaufbereitungsanlage 10 ist ein Handbremsventil 18 angeschlossen. Über dieses Handbremsventil 18 kann weiterhin ein Federspeicherzylinder 12 mit Druckluft versorgt werden. Eine Druckmessverbindung zwischen dem Federspeicherzylinder 12 und dem Drucksensor 44 ist weiterhin vorgesehen.

Der CAN-Bus 28 steht über eine elektronische Steuerung 78, die beispielsweise Bestandteil eines Fahrzeugführungsrechners sein kann, mit einem Pedal 20, beispielsweise einem Bremspedal, einem Kupplungspedal oder einem Gaspedal, des Nutzkraftfahrzeugs elektrisch in Verbindung.

Die erfindungsgemäße Druckluftaufbereitungsanlage arbeitet im Hinblick auf das Lösen der Feststellbremsanlage wie folgt: Nach Einschalten der Zündung und dementsprechender Inbetriebnahme des Kompressors steht am Drucklufteingang 1 Druckluft an. Folglich kann in der Luftaufbereitungsanlage 10 Druck aufgebaut werden und bei Überschreiten der Öffnungsdrücke der einzelnen Überströmventile 56, 58, 16, 60, 62, 64 den einzelnen Verbrauchern zugeführt werden. Im Hinblick auf das Überströmventil 16, das der Versorgung der Anhängerbremsanlage über den Druckluftausgang 23 und der Versorgung der Feststellbremsanlage über den Druckluftausgang 23.1 dient, besteht jedoch eine Besonderheit. Sogleich nach dem Einschalten der Zündung wird nämlich das Magnetventil 14 bestromt, so dass dem Steuereingang des Überströmventils 16 Druckluft zugeführt wird. Folglich sperrt das Überströmventil ein Überströmen von Druckluft zu den Druckluftausgängen 23 und 23.1. Wird nun das Handbremsventil 18 geöffnet, so findet aufgrund der Sperrung des Überströmventils 16 keine Druckluftversorgung des Federspeicherzylinders 12 über den Druckluftausgang 23.1 statt. Insbesondere ist auch kein Behälter für die Anhängerbremsanlage am Druckluftausgang 23 angeschlossen, so dass auch kein entsprechender Druckluftvorrat vorhanden ist, aus dem Druckluft entnommen werden könnte. Die Feststellbremsanlage arretiert also in zuverlässiger Weise das Fahrzeug, was durch die von der elektrischen Steuerung 30 angesteuerte Leuchte 32 durch Dauerleuchten angezeigt wird, solange sich der Druck in den an den Druckluftausgängen 21, 22 angeschlossenen Betriebsbremskreisen unterhalb eines Minimaldrucks für den Betrieb der Betriebsbremsanlage befindet. Überschreitet dieser Druck allerdings den Minimaldruck, so beginnt die Leuchte 32 zu blinken. Dies zeigt an, dass es nun prinzipiell möglich ist, die Feststellbremsanlage zu lösen. Befindet sich das Handbremsventil 18 bereits im geöffneten Zustand, so erfolgt, das Lösen der Feststellbremsanlage dadurch, dass der Fahrer das Pedal 20 antippt, wodurch er einen Indikator für seine Anwesenheit an die elektrische Steuerung 30 übermittelt. Ist das Handbremsventil 18 bei beginnendem Blinken der Leuchte 32 noch nicht geöffnet, so kann der Fahrer zu diesem Zeitpunkt das Handbremsventil 18 öffnen und gleichzeitig oder zeitverzögert das Pedal 20 zur Bereitstellung des Indikators antippen. Grundsätzlich sind auch andere elektrische Signalgeber zur Bereitstellung des Indikators denkbar, beispielsweise ein Indikator, der einen geschlossenen Sicherheitsgurt anzeigt. Der Druck im Federspeicherzylinder 12 wird von dem Drucksensor 44 gemessen. Sobald dieser Druck eine bestimmte Druckschwelle überschreitet, veranlasst die elektrische Steuerung 30, dass die Leuchte 32 vollständig erlischt. Der Fahrer kann zu diesem Zeitpunkt davon ausgehen, dass die Feststellbremsanlage gelöst ist.

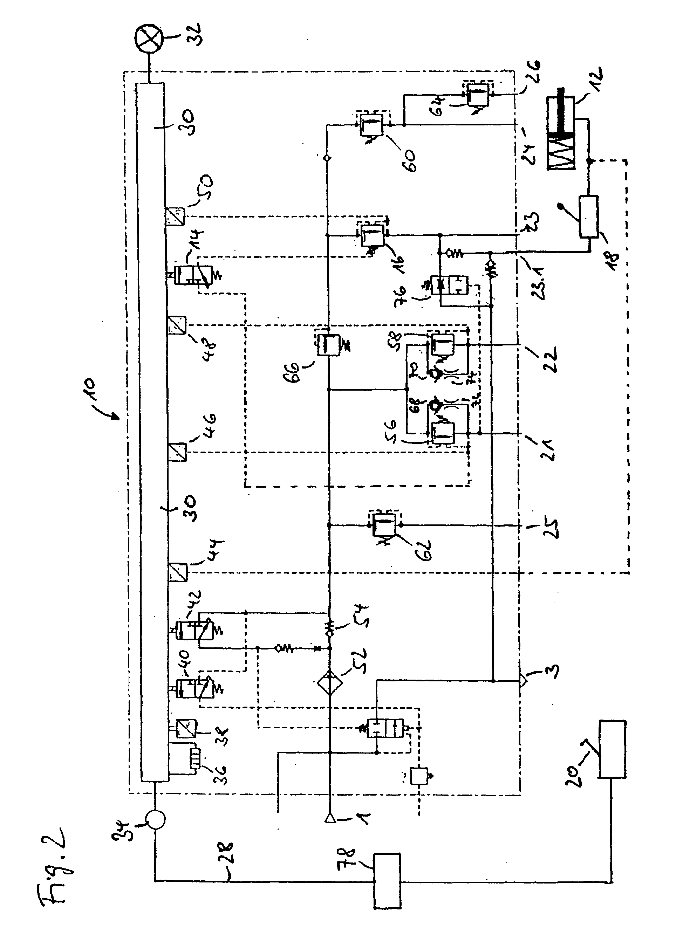

Figur 2 zeigt eine Schaltskizze einer zweiten Ausführungsform einer erfindungsgemäßen Luftaufbereitungsanlage. Im Gegensatz zu Figur 1 wird hier der Drucklufteingang des Magnetventils 14 nicht zentral versorgt, sondern aus dem Kreis 1 der Betriebsbremsanlage.

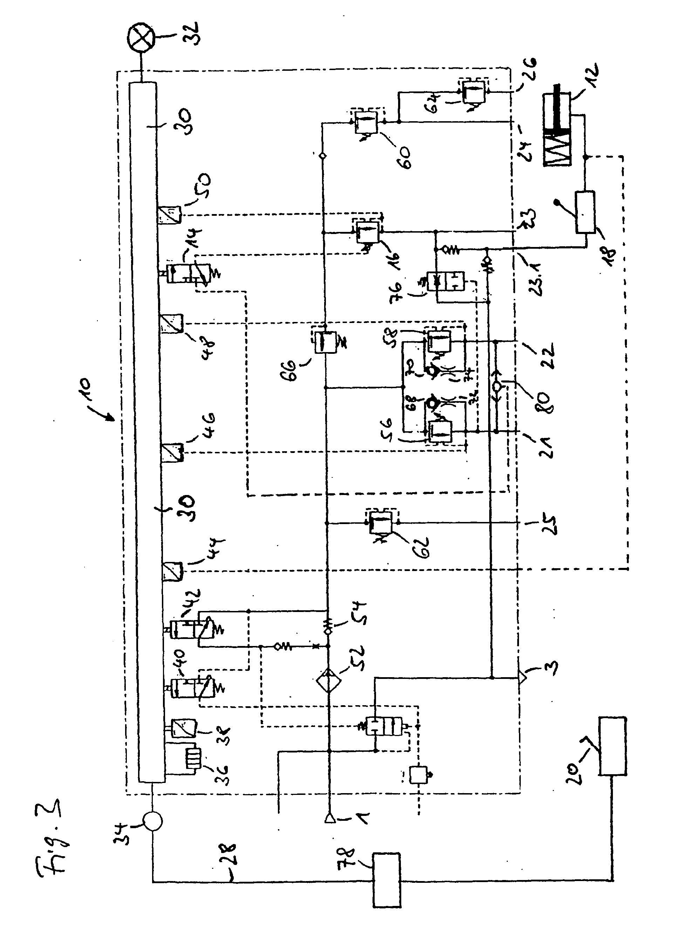

Figur 3 zeigt eine Schaltskizze einer dritten Ausführungsform einer erfindungsgemäßen Luftaufbereitungsanlage. Im Gegensatz zu Figur 1 wird auch hier der Drucklufteingang des Magnetventils 14 nicht zentral versorgt, sondern über ein Wechselventil 80, das an Kreis 1 und Kreis 2 der Betriebsbremsanlage angeschlossen ist.

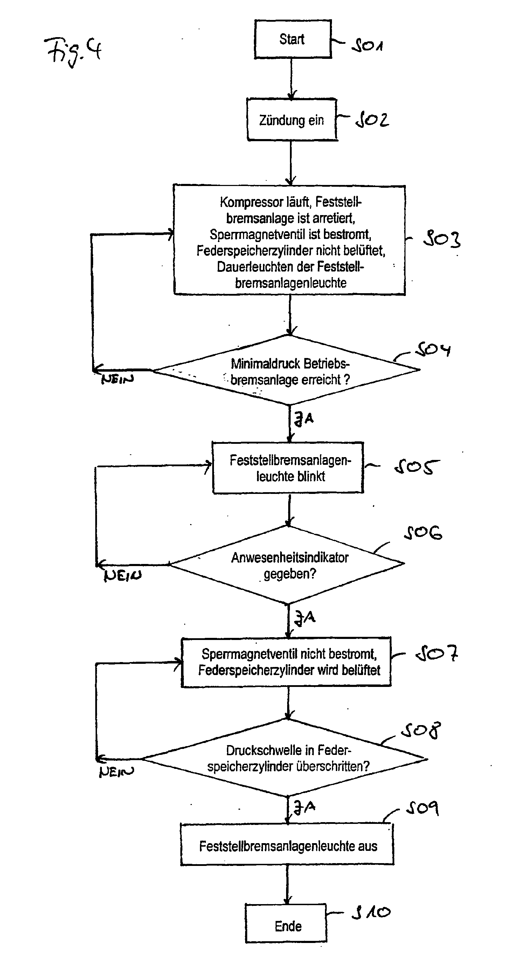

Figur 4 zeigt ein Flussdiagramm zur Erläuterung eines erfindungsgemäßen Verfahrens. Nach dem Start des dargestellten Funktionsablaufs in Schritt S01 wird die Zündung in Schritt S02 eingeschaltet. Bei normalem Betriebsablauf wird daraufhin gemäß Schritt S03 der Kompressor laufen, und die Feststellbremsanlage ist arretiert. Erfindungsgemäß ist das Sperrmagnetventil 14 in diesem Betriebszustand bestromt, so dass der in den Figuren 1 bis 3 beispielhaft für die Feststellbremsanlage dargestellte Federspeicherzylinder 12 nicht belüftet ist. Die Feststellbremsanlagenleuchte 32 leuchtet dauerhaft. In Schritt S04 wird nun geprüft, ob die Betriebsbremsanlage ihren Minimaldruck erreicht hat. Ist dies nicht der Fall, so ändert sich an den in Schritt S03 angegebenen Zustandsmerkmalen nichts. Der Ablauf geht somit zu Schritt S03 über. Ist jedoch der Minimaldruck der Betriebsbremsanlage erreicht, so blinkt die Feststellbremsanlagenleuchte 32 gemäß Schritt S05. In Schritt S06 wird nun geprüft, ob ein Anwesenheitsindikator gegeben ist, was beispielsweise aufgrund des Berührens eines Pedals 20 der Fall sein kann. Ist der Anwesenheitsindikator nicht gegeben, so blinkt die Feststellbremsanlagenleuchte 32 weiter, der Verfahrensablauf kehrt somit zu Schritt S05 zurück. Wird in Schritt S06 jedoch festgestellt, dass der Anwesenheitsindikator gegeben ist, so geht der Ablauf zu Schritt S07 über, wonach das Sperrmagnetventil 14 nicht mehr bestromt ist und der Federspeicherzylinder 12 belüftet wird. Danach wird in Schritt S08 geprüft, ob eine Druckschwelle im Federspeicherzylinder überschritten ist. Ist dies nicht der Fall, so kehrt der Ablauf zu Schritt S07 zurück. Im Federspeicherzylinder 12 wird somit weiterhin Druck aufgebaut. Ist die Druckschwelle im Federspeicherzylinder jedoch überschritten, so erlischt die Feststellbremsanlagenleuchte 32 gemäß Schritt S09. Da die Feststellbremsanlage nun gelöst ist, kommt der Ablauf in Schritt S10 zu seinem Ende.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Drucklufteingang
- 3: Ablass
- 10: Luftaufbereitungsanlage
- 12: Federspeicherzylinder
- 14: Magnetventil
- 16: Überströmventil
- 18: Handbremsventil
- 20: Pedal
- 21: Druckluftausgang
- 22: Druckluftausgang
- 23: Druckluftausgang
- 23.1: Druckluftausgang
- 24: Druckluftausgang
- 25: Druckluftausgang
- 26: Druckluftausgang
- 28: CAN-Bus
- 30: elektrische Steuerung
- 32: Leuchte
- 34: Zentralstecker
- 36: Heizung
- 38: Temperatursensor
- 40: Magnetventil zur Druckreglersteuerung
- 42: Magnetventil zur Regenerationssteuerung
- 44: Drucksensor
- 46: Drucksensor
- 48: Drucksensor
- 50: Drucksensor
- 52: Trocknerkartusche
- 54: Druckreglerrückschlagventil
- 56: Überströmventil
- 58: Überströmventil
- 60: Überströmventil
- 62: Überströmventil
- 64: Überströmventil
- 66: Druckbegrenzungsventil
- 68: Rückschlagventil
- 70: Rückschlagventil
- 72: Drossel
- 74: Drossel
- 76: Ventil
- 78: elektrische Steuerung
- 80: Wechselventil

## Patentansprüche

1. Luftaufbereitungsanlage (10) zum Versorgen einer Nutzkraftfahrzeugbremsanlage mit Druckluft, mit einem zur Versorgung einer Feststellbremsanlage vorgesehenen Druckluftausgang (23.1), der zur Belüftung mindestens eines Federspeicherzylinders (12) einer Feststellbremse und damit zum Lösen der Feststellbremse vorgesehen ist, wobei der Druckluftausgang (23.1) über ein Handbremsventil (18) mit dem mindestens einen Federspeicherzylinder (12) verbunden ist und bei Anwesenheit einer Person zur Führung des Nutzkraftfahrzeugs ein elektrisch auswertbarer Indikator zur Verfügung gestellt werden kann, **dadurch gekennzeichnet,**
- **dass** ein elektrisch betätigbares Ventil (14) vorgesehen ist, mittels welchem eine Versorgung des Druckluftausgangs (23.1) mit Druckluft verhindert werden kann, und
- **dass** das elektrisch betätigbare Ventil (14) die Versorgung des Druckluftausgangs (23.1) mit Druckluft verhindert, wenn der Indikator nicht vorliegt.

2. Luftaufbereitungsanlage (10) nach Anspruch 1, **dadurch gekennzeichnet,**
- **dass** der Druckluftausgang (23.1) über ein Überströmventil (16) mit Druckluft versorgt wird und
- **dass** das elektrisch betätigbare Ventil ein Magnetventil (14) ist, das in mindestens einem Schaltzustand das Überströmventil (16) sperrt.

3. Luftaufbereitungsanlage (10) nach Anspruch 1 oder 2, **dadurch gekennzeichnet, dass** das Magnetventil (14) ein 3/2-Ventil ist, das in einem ersten Schaltzustand einen Steuereingang des Überströmventils (16) entlüftet und in einem zweiten Schaltzustand den Steuereingang des Überströmventils (16) mit Druck beaufschlagt, wodurch das Überströmventil (16) gesperrt wird.

4. Luftaufbereitungsanlage (10) nach einem der vorangehenden Ansprüche, **dadurch gekennzeichnet, dass** der zweite Schaltzustand des 3/2-Magnetventils (14) durch Bestromen des 3/2-Magnetventils (14) herbeigeführt wird.

5. Luftaufbereitungsanlage (10) nach einem der vorangehenden Ansprüche, **dadurch gekennzeichnet, dass** das Magnetventil (14) zentral mit Druckluft versorgt wird.

6. Luftaufbereitungsanlage (10) nach einem der vorangehenden Ansprüche, **dadurch gekennzeichnet, dass** das Magnetventil durch mindestens einen Betriebsbremskreis (21, 22) mit Druckluft versorgt wird.

7. Luftaufbereitungsanlage (10) nach einem der vorangehenden Ansprüche, **dadurch gekennzeichnet, dass** der elektrisch auswertbare Indikator durch Betätigen eines Pedals (20) im Führerhaus des Nutzkraftfahrzeugs zur Verfügung gestellt wird.

8. Luftaufbereitungsanlage (10) nach einem der vorangehenden Ansprüche, **dadurch gekennzeichnet, dass** der elektrisch auswertbare Indikator durch Anlegen eines Sicherheitsgurts im Führerhaus des Nutzkraftfahrzeugs zur Verfügung gestellt wird.

9. Luftaufbereitungsanlage (10) nach einem der vorangehenden Ansprüche, **dadurch gekennzeichnet,**
- **dass** der elektrisch auswertbare Indikator über einen Datenbus (28) einer elektrischen Steuerung (30) unmittelbar oder mittelbar zuführbar ist und- dass das elektrisch betätigbare Ventil (14) von der elektrischen Steuerung (30) betätigbar ist.

10. Luftaufbereitungsanlage (10) nach einem der vorangehenden Ansprüche, **dadurch gekennzeichnet,**
- **dass** eine Signaleinrichtung (32) im Führerhaus des Nutzkraftfahrzeugs vorgesehen ist, die anzeigt, dass ein Minimaldruck zum Betreiben der Betriebsbremsanlage überschritten ist, und
- **dass** bei Überschreiten des Minimaldrucks und vorliegendem Indikator der Druckluftausgang (23.1) mit Druckluft versorgt wird.

11. Luftaufbereitungsanlage (10) nach Anspruch 10, **dadurch gekennzeichnet,**
- **dass** als Signaleinrichtung eine Leuchte (32) verwendet wird, die herkömmlich die Arretierung des Fahrzeugs mittels der Feststellbremsanlage anzeigt,
- **dass** die Leuchte (32) bei Überschreiten des Minimaldrucks und festgestellter Feststellbremse blinkt und
- **dass** die Leuchte (32) bei Überschreiten einer Druckschwelle im Federspeicherzylinder (12) erlischt.

12. Verfahren zum Belüften mindestens eines Federspeicherzylinders (12) einer Feststellbremse und damit zum Lösen der Feststellbremse einer Nutzkraftfahrzeugbremsanlage, die von einer Luftaufbereitungsanlage (10) mit Druckluft versorgt wird, wobei die Luftaufbereitungsanlage einen zur Versorgung der Feststellbremsanlage vorgesehenen Druckluftausgang (23.1) aufweist, der über ein Handbremsventil (18) mit dem mindestens einen Federspeicherzylinder (12) verbunden ist, wobei bei Anwesenheit einer Person zur Führung des Nutzkraftfahrzeugs ein elektrisch auswertbarer Indikator zur Verfügung gestellt werden kann, **dadurch gekennzeichnet,**
- **dass** ein elektrisch betätigbares Ventil (14) vorgesehen ist, mittels welchem eine Versorgung des Druckluftausgangs (23.1) mit Druckluft verhindert werden kann, und
- **dass** das elektrisch betätigbare Ventil (14) die Versorgung des Druckluftausgangs (23.1) mit Druckluft verhindert, wenn der Indikator nicht vorliegt.

13. Verfahren nach Anspruch 12, **dadurch gekennzeichnet,**
- **dass** der Druckluftausgang (23.1) über ein Überströmventil (16) mit Druckluft versorgt wird und
- **dass** das elektrisch betätigbare Ventil ein Magnetventil (14) ist, das in mindestens einem Schaltzustand das Überströmventil (16) sperrt.

14. Verfahren nach Anspruch 12 oder 13, **dadurch gekennzeichnet, dass** das Magnetventil (14) ein 3/2-Ventil ist, das in einem ersten Schaltzustand einen Steuereingang des Überströmventils (16) entlüftet und in einem zweiten Schaltzustand den Steuereingang des Überströmventils (16) mit Druck beaufschlagt, wodurch das Überströmventil (16) gesperrt wird.

15. Verfahren nach einem der Ansprüche 12 bis 14, **dadurch gekennzeichnet, dass** der zweite Schaltzustand des 3/2-Magnetventils (14) durch Bestromen des 3/2-Magnetventils (14) herbeigeführt wird.

16. Verfahren nach einem der Ansprüche 12 bis 15, **dadurch gekennzeichnet, dass** das Magnetventil (14) zentral mit Druckluft versorgt wird.

17. Verfahren nach einem der Ansprüche 12 bis 16, **dadurch gekennzeichnet, dass** das Magnetventil durch mindestens einen Betriebsbremskreis (21, 22) mit Druckluft versorgt wird.

18. Verfahren nach einem der Ansprüche 12 bis 17, **dadurch gekennzeichnet, dass** der elektrisch auswertbare Indikator durch Betätigen eines Pedals (20) im Führerhaus des Nutzkraftfahrzeugs zur Verfügung gestellt wird.

19. Verfahren nach einem der Ansprüche 12 bis 18, **dadurch gekennzeichnet, dass** der elektrisch auswertbare Indikator durch Anlegen eines Sicherheitsgurts im Führerhaus des Nutzkraftfahrzeugs zur Verfügung gestellt wird.

20. Verfahren nach einem der Ansprüche 12 bis 19, **dadurch gekennzeichnet,**
- **dass** der elektrisch auswertbare Indikator über einen Datenbus (28) einer elektrischen Steuerung (30) unmittelbar oder mittelbar zugeführt wird und
- **dass** das elektrisch betätigbare Ventil (14) von der elektrischen Steuerung (30) betätigt wird.

21. Verfahren nach einem der Ansprüche 12 bis 20, **dadurch gekennzeichnet,**
- **dass** eine Signaleinrichtung (32) im Führerhaus des Nutzkraftfahrzeugs vorgesehen ist, die anzeigt, dass ein Minimaldruck zum Betreiben der Betriebsbremsanlage überschritten ist, und
- **dass** bei Überschreiten des Minimaldrucks und vorliegendem Indikator der Druckluftausgang (23.1) mit Druckluft versorgt wird.

22. Verfahren nach Anspruch 21, **dadurch gekennzeichnet,**
- **dass** als Signaleinrichtung eine Leuchte (32) verwendet wird, die herkömmlich die Arretierung des Fahrzeugs mittels der Feststellbremsanlage anzeigt,
- **dass** die Leuchte (32) bei Überschreiten des Minimaldrucks und festgestellter Feststellbremse blinkt und
- **dass** die Leuchte (32) bei Überschreiten einer Druckschwelle im Federspeicherzylinder (12) erlischt.

23. Nutzkraftfahrzeug mit einer Luftaufbereitungsanlage (10) nach einem der Ansprüche 1 bis 11.

## Claims

1. An air treatment system (10) for supplying a commercial vehicle brake system with compressed air, having a compressed air outlet (23.1) which is provided for supplying a parking brake system and which is intended for ventilating at least one spring-loaded cylinder (12) of a parking brake and consequently for releasing the parking brake, wherein the compressed air outlet (23.1) is connected to the at least one spring-loaded cylinder (12) via a handbrake valve (18) and when a person for driving the commercial vehicle is present, an electrically evaluatable indicator can be made available,
**characterized**
- **in that** an electrically actuable valve (14) is provided, by means of which a supply of the compressed air outlet (23.1) with compressed air can be prevented,
- **in that**, when a person for driving the commercial vehicle is present, an electrically evaluatable indicator can be made available, and
- **in that** the electrically actuable valve (14) prevents the supply of the compressed air outlet (23.1) with compressed air when the indicator is absent.

2. The air treatment system (10) as claimed in claim 1, **characterized**
- **in that** the compressed air outlet (23.1) is supplied with compressed air via an overflow valve (16), and
- **in that** the electrically actuable valve is a solenoid valve (14) which shuts off the overflow valve (16) in at least one switching state.

3. The air treatment system (10) as claimed in claim 1 or 2, **characterized in that** the solenoid valve (14) is a 3/2-way valve which, in a first switching state, ventilates a control inlet of the overflow valve (16) and, in a second switching state, acts with pressure upon the control inlet of the overflow valve (16), with the result that the overflow valve (16) is shut off.

4. The air treatment system (10) as claimed in one of the preceding claims, **characterized in that** the second switching state of the 3/2-way solenoid valve (14) is brought about by the application of current to the 3/2-way solenoid valve (14).

5. The air treatment system (10) as claimed in one of the preceding claims, **characterized in that** the solenoid valve (14) is supplied centrally with compressed air.

6. The air treatment system (10) as claimed in one of the preceding claims, **characterized in that** the solenoid valve is supplied with compressed air by means of at least one service brake circuit (21, 22).

7. The air treatment system (10) as claimed in one of the preceding claims, **characterized in that** the electrically evaluatable indicator is made available as a result of the actuation of a pedal (20) in the driver's cab of the commercial vehicle.

8. The air treatment system (10) as claimed in one of the preceding claims, **characterized in that** the electrically evaluatable indicator is made available as a result of the fastening of a safety belt in the driver's cab of the commercial vehicle.

9. The air treatment system (10) as claimed in one of the preceding claims, **characterized**
- **in that** the electrically evaluatable indicator can be supplied directly or indirectly to an electrical control (30) via a data bus (28), and
- **in that** the electrically actuable valve (14) can be actuated by the electrical control (30).

10. The air treatment system (10) as claimed in one of the preceding claims, **characterized**
- **in that** a signal device (32) is provided in the driver's cab of the commercial vehicle, said signal device indicating that a minimum pressure for operating the service brake system is overshot, and
- **in that** the compressed air outlet (23.1) is supplied with compressed air in the event of the overshooting of the minimum pressure and with the indicator present.

11. The air treatment system (10) as claimed in one of the preceding claims, **characterized**
- **in that** the signal device used is a light (32) which conventionally indicates the detention of the vehicle by means of the parking brake system,
- **in that** the light (32) flashes when the minimum pressure is overshot and the parking brake is locked, and
- **in that** the light (32) is extinguished when a pressure threshold in the spring-loaded cylinder (12) is overshot.

12. A method for ventilating at least one spring-loaded cylinder (12) of a parking brake and consequently for releasing the parking brake of a commercial vehicle brake system which is supplied with compressed air by an air treatment system (10), the air treatment system having a compressed air outlet (23.1) provided for supplying the parking brake system, **characterized**
- **in that** an electrically actuable valve (14) is provided, by means of which a supply of the compressed air outlet (23.1) with compressed air can be prevented, and
- **in that** the electrically actuable valve (14) prevents the supply of the compressed air outlet (23.1) with compressed air when the indicator is absent.

13. The method as claimed in claim 12, **characterized**
- **in that** the compressed air outlet (23.1) is supplied with compressed air via an overflow valve (16), and
- **in that** the electrically actuable valve is a solenoid valve (14) which shuts off the overflow valve (16) in at least one switching state.

14. The method as claimed in claim 12 or 13, **characterized in that** the solenoid valve (14) is a 3/2-way valve which, in a first switching state, ventilates a control inlet of the overflow valve (16) and, in a second switching state, acts with pressure upon the control inlet of the overflow valve (16), with the result that the overflow valve (16) is shut off.

15. The method as claimed in one of claims 12 to 14, **characterized in that** the second switching state of the 3/2-way solenoid valve (14) is brought about by the application of current to the 3/2-way solenoid valve (14).

16. The method as claimed in one of claims 12 to 15, **characterized in that** the solenoid valve (14) is supplied centrally with compressed air.

17. The method as claimed in one of claims 12 to 16, **characterized in that** the solenoid valve is supplied with compressed air by means of at least one service brake circuit (21, 22).

18. The method as claimed in one of claims 12 to 17, **characterized in that** the electrically evaluatable indicator is made available as a result of the actuation of a pedal (20) in the driver's cab of the commercial vehicle.

19. The method as claimed in one of claims 12 to 18, **characterized in that** the electrically evaluatable indicator is made available as a result of the fastening of a safety belt in the driver's cab of the commercial vehicle.

20. The method as claimed in one of claims 12 to 19, **characterized**
- **in that** the electrically evaluatable indicator is supplied directly or indirectly to an electrical control (30) via a data bus (28), and
- **in that** the electrically actuable valve (14) is actuated by the electrical control (30).

21. The method as claimed in one of claims 12 to 20, **characterized**
- **in that** a signal device (32) is provided in the driver's cab of the commercial vehicle, said signal device indicating that a minimum pressure for operating the service brake system is overshot, and
- **in that** the compressed air outlet (23.1) is supplied with compressed air in the event of the overshooting of the minimum pressure and with the indicator present.

22. The method as claimed in claim 21, **characterized**
- **in that** the signal device used is a light (32) which conventionally indicates the detention of the vehicle by means of the parking brake system,
- **in that** the light (32) flashes when the minimum pressure is overshot and the parking brake is locked, and
- **in that** the light (32) is extinguished when a pressure threshold in the spring-loaded cylinder (12) is overshot.

23. A commercial vehicle having an air treatment system (10) as claimed in one of claims 1 to 11.

## Revendications

1. Système (10) de traitement d'air pour l'alimentation d'un système de frein de véhicule utilitaire en air comprimé, comprenant une sortie (23.1) d'air comprimé, qui est prévue pour l'alimentation d'un système de frein de stationnement et qui est prévue pour la mise à l'atmosphère d'au moins un cylindre (12) accumulateur à ressort d'un frein de stationnement et ainsi pour desserrer le frein de stationnement, la sortie (23.1) d'air comprimé communiquant par une vanne (18) de frein à main avec le au moins un cylindre (12) accumulateur à ressort et, en présence d'une personne pour conduire le véhicule utilitaire, un indicateur pouvant être exploité électriquement peut être mis à disposition, **caractérisé**
- **en ce qu**'il est prévu une vanne (14) pouvant être actionnée électriquement, au moyen de laquelle une alimentation en air comprimé de la sortie (23.1) d'air comprimé peut être empêchée, et
- en ce que la vanne (14) pouvant être actionnée électriquement empêche l'alimentation en air comprimé de la sortie (23.1) d'air comprimé, lorsque l'indicateur n'est pas présent.

2. Système (10) de traitement d'air suivant la revendication 1, **caractérisé**
- **en ce que** la sortie (23.1) d'air comprimé est alimentée en air comprimé par une vanne (16) de décharge et
- **en ce que** la vanne pouvant être alimentée électriquement est une électrovanne (14), qui, dans au moins un état de commutation, ferme la vanne (16) de décharge.

3. Système (10) de traitement d'air suivant la revendication 1 ou 2, **caractérisé en ce que** l'électrovanne (14) est une vanne 3/2, qui, dans un premier état de commutation, purge une entrée de commande de la vanne (16) de décharge et, dans un deuxième état de commutation, alimente en pression l'entrée de commande de la vanne (16) de décharge, de manière à fermer la vanne (16) de décharge.

4. Système (10) de traitement d'air suivant l'une des revendications précédentes, **caractérisé en ce que** le deuxième état de commutation de l'électrovanne (14) 3/2 est provoqué par l'alimentation en courant électrique de l'électrovanne (14) 3/2.

5. Système (10) de traitement d'air suivant l'une des revendications précédentes, **caractérisé en ce que** l'électrovanne (14) est alimentée centralement en air comprimé.

6. Système (10) de traitement d'air suivant l'une des revendications précédentes, **caractérisé en ce que** l'électrovanne est alimentée en air comprimé par au moins un circuit (21, 22) de frein de service.

7. Système (10) de traitement d'air suivant l'une des revendications précédentes, **caractérisé en ce que** l'indicateur pouvant être exploité électriquement est mis à disposition par actionnement d'une pédale (20) dans la cabine de conduite du véhicule utilitaire.

8. Système (10) de traitement d'air suivant l'une des revendications précédentes, **caractérisé en ce que** l'indicateur pouvant être exploité électriquement est mis à disposition par application d'une sangle de sécurité dans la cabine de conduite du véhicule utilitaire.

9. Système (10) de traitement d'air suivant l'une des revendications précédentes, **caractérisé**
- **en ce que** l'indicateur pouvant être exploité électriquement peut être envoyé directement ou indirectement par un bus (28) de données d'une commande (30) électrique et
- **en ce que** la vanne (14) pouvant être actionnée électriquement peut être actionnée par la commande (30) électrique.

10. Système (10) de traitement d'air suivant l'une des revendications précédentes, **caractérisé**
- **en ce qu**'il est prévu un dispositif (32) de signalisation dans la cabine de conduite du véhicule utilitaire, qui indique qu'une pression minimum pour le fonctionnement du système de frein de service est dépassée, et
- en ce que, lorsque la pression minimum est dépassée et en présence de l'indicateur, la sortie (23.1) d'air comprimé est alimentée en air comprimé.

11. Système (10) de traitement d'air suivant la revendication 10, **caractérisé**
- **en ce qu**'il est utilisé comme dispositif de signalisation une lampe (32), qui indique habituellement l'arrêt du véhicule au moyen du système de frein de stationnement,
- en ce que la lampe (32) clignote lorsque la pression minimum est dépassée et lorsque le frein de stationnement est serré et
- en ce que la lampe (32) s'éteint lorsqu'un seuil de pression est dépassé dans le cylindre (12) accumulateur à ressort.

12. Procédé de mise à l'atmosphère d'au moins un cylindre (12) accumulateur à ressort d'un frein de stationnement et ainsi pour desserrer le frein de stationnement d'un système de frein de véhicule utilitaire, qui est alimenté en air comprimé par un système (10) de traitement d'air, le système de traitement d'air ayant une sortie (23.1) d'air comprimé prévue pour l'alimentation du système de frein de stationnement et communiquant par une vanne (18) de frein à main avec le au moins un signal (12) accumulateur à ressort, dans lequel, en présence d'une personne pour conduire le véhicule utilitaire, un indicateur pouvant être exploité électriquement peut être mis à disposition, **caractérisé**
- **en ce qu**'il est prévu une vanne (14) pouvant être actionnée électriquement, au moyen de laquelle une alimentation en air comprimé de la sortie (23.1) d'air comprimé peut être empêchée, et
- en ce que la vanne (14) pouvant être actionnée électriquement empêche l'alimentation en air comprimé de la sortie (23.1) d'air comprimé, lorsque l'indicateur n'est pas présent.

13. Procédé suivant la revendication 12, **caractérisé**
- **en ce que** la sortie (23.1) d'air comprimé est alimentée en air comprimé par une vanne (16) de décharge et
- **en ce que** la vanne pouvant être alimentée électriquement est une électrovanne (14), qui, dans au moins un état de commutation, ferme la vanne (16) de décharge.

14. Procédé suivant la revendication 12 ou 13, **caractérisé en ce que** l'électrovanne (14) est une vanne 3/2, qui, dans un premier état de commutation, purge une entrée de commande de la vanne (16) de décharge et, dans un deuxième état de commutation, alimente en pression l'entrée de commande de la vanne (16) de décharge, de sorte que la vanne (16) de décharge est fermée.

15. Procédé suivant l'une des revendications 12 à 14, **caractérisé en ce que** le deuxième état de commutation de l'électrovanne (14) 3/2 est provoqué par l'alimentation en courant électrique de l'électrovanne (14) 3/2.

16. Procédé suivant l'une des revendications 12 à 15, **caractérisé en ce que** l'électrovanne (14) est alimentée centralement en air comprimé.

17. Procédé suivant l'une des revendications 12 à 16, **caractérisé en ce que** l'électrovanne est alimentée en air comprimé par au moins un circuit (21, 22) de frein de service.

18. Procédé suivant l'une des revendications 12 à 17, **caractérisé en ce que** l'indicateur pouvant être exploité électriquement est mis à disposition par actionnement d'une pédale (20) dans la cabine de conduite du véhicule utilitaire.

19. Procédé suivant l'une des revendications 12 à 18, **caractérisé en ce que** l'indicateur pouvant être exploité électriquement est mis à disposition par application d'une sangle de sécurité dans la cabine de conduite du véhicule utilitaire.

20. Procédé suivant l'une des revendications 12 à 19, **caractérisé**
- **en ce que** l'indicateur pouvant être exploité électriquement peut être envoyé directement ou indirectement par un bus (28) de données d'une commande (30) électrique et
- **en ce que** la vanne (14) pouvant être actionnée électriquement peut être actionnée par la commande (30) électrique.

21. Procédé suivant l'une des revendications 12 à 20, **caractérisé**
- **en ce qu**'il est prévu un dispositif (32) de signalisation dans la cabine de conduite du véhicule utilitaire, qui indique qu'une pression minimum pour le fonctionnement du système de frein de service est dépassée, et
- en ce que, lorsque la pression minimum est dépassée et en présence de l'indicateur, la sortie (23.1) d'air comprimé est alimentée en air comprimé.

22. Procédé suivant la revendication 21, **caractérisé**
- **en ce qu**'il est utilisé comme dispositif de signalisation une lampe (32), qui indique habituellement l'arrêt du véhicule au moyen du système de frein de stationnement,
- en ce que la lampe (32) clignote lorsque la pression minimum est dépassée et lorsque le frein de stationnement est serré et
- en ce que la lampe (32) s'éteint lorsqu'un seuil de pression est dépassé dans le cylindre (12) accumulateur à ressort.

23. Véhicule utilitaire ayant un système (10) de traitement d'air suivant l'une des revendications 1 à 11.
